Europäisches Patentamt

European Patent Office

Office européen des brevets

(11) Veröffentlichungsnummer: **0 348 545**
A1

## (12) EUROPÄISCHE PATENTANMELDUNG

(21) Anmeldenummer: 88110484.8

(22) Anmeldetag: 30.06.88

(51) Int. Cl.⁴: **F16B 13/14 , F16B 13/04 , F16B 2/16 , B25D 16/00**

(43) Veröffentlichungstag der Anmeldung:
03.01.90 Patentblatt 90/01

(84) Benannte Vertragsstaaten:
DE

(71) Anmelder: **Sell, Rudolf, Dr.-Ing.**
**Seebenseestrasse 14**
**D-8000 München 70(DE)**

(72) Erfinder: **Sell, Rudolf, Dr.-Ing.**
**Seebenseestrasse 14**
**D-8000 München 70(DE)**

(54) **Ankerbefestigung, Verfahren und Mittel zu deren Herstellung.**

(57) Die Anmeldung hat Ankerbefestigungen im rotationssymetrischen Sackloch unter Verwendung von flüssigem Bindemittel und Feststoffen in Verbund gebrachten, mit schrägen oder schraubenförmigen Rippen profilierten Rundstab (1) zum Gegenstand, der durch selbsthemmende Verkeilung zusätzlicher Elemente (3) gegen die Lochwand (4) auch durch Formschluß festgelegt ist, wobei die für die Verkeilung erforderlichen schrägen Flächen am Stab (1) oder an der Lochwand 4) oder sowohl an der Lochwand 4) als am Stab ausgebildet sind.

Für eine Ankerbefestigung in dichtem Fels oder Beton ist die für die Verkeilung erforderliche geneigte Fläche am Ankerstab 1) ausgebildet, dessen schraubenförmige, lochgrundnahe Profilierung P) eine große Rippenhöhe besitzt, um die kugelförmigen Verkeilungselemente 3) aufzunehmen, die durch erfindungsgemäße Stoß- und Drehimpulse so gegen die Lochwand 4) gepreßt werden, daß das innere Einsteckteilende vorgespannt ist.

Mit der Höchstwertbegrenzung der Drehimpulse wird ein kontrollierter Einbau der Anker erreicht und verhindert, daß durch zu langes Drehen der Mörtel aus dem Spalt herausgefördert wird. Das ebenso als Bohrgerät nützliche Setzgerät, der Ankerstab 1), die Formschluß eingehenden Elemente (3) und die Mörtelpatrone 10) sind Mittel der anmeldungsgemäßen Ankerbefestigung.

Fig.1

EP 0 348 545 A1

## Ankerbefestigung, Verfahren und Mittel zu deren Herstellung

Die Erfindung betrifft eine Ankerbefestigung, bei der ein stabförmiger, profilierter Anker in einem Sackloch in dichtem Fels, Beton, Stahl oder dergl., mit einem Gemenge aus flüssigen Bindemitteln- und Feststoffen versetzt ist, die zu einer Festlegung, sowohl durch Verbund als auch im Bereich des Lochgrundes mechanisch durch Formschluß führt, wie im kennzeichnenden Teil des Hauptanspruchs angegeben. Die Erfindung hat darüberhinaus Verfahren und Mittel zur Herstellung der Ankerbefestigung zum Gegenstand.

Aus der DE-PS 29 41 769 ist ein Verfahren zum Setzen eines Ankerbolzens in Bohrlöchern, insbesondere im mineralischen Beton bekannt, das einen aushärtbaren Mörtel verwendet, der beim Eindrehen des Ankerbolzens durchmischt wird und dabei im Bohrungsinneren mittels Abriebkörner eine Durchmesservergrößerung bewirken soll, bekannt gemacht. Dieser aushärtbare Mörtel befindet sich zunächst nach Komponenten getrennt in einer rohrförmigen Patrone, die in das Bohrloch eingeführt wird. Der Ankerbolzen wird unter Schlag bei gleichzeitiger Drehung in das Bohrloch vorgetrieben, wobei die die Mörtelkomponenten enthaltene Patrone in dem Bohrloch zerstört wird. Die austretende Masse aus Reaktionsharz und Härter wird durch die Drehbewegung der Ankerstange miteinander vermischt, wobei gleichzeitig eine auf der Ankerstange schraubenförmig verlaufende Rippe dafür sorgt, daß die zunächst im Bohrlochtiefsten befindlichen Mörtelbestandteile allmählich über den gesamten Teil des Ankerbolzens, der als Einsteckteil bezeichnet wird, verteilt wird.

Der Mörtel enthält füllende Zuschlagstoffe, beispielsweise Quarzsand, die als sogenannte Abriebkörper eine Durchmesservergrößerung des Bohrlochs bewirken sollen. Indessen vermögen die Körner mit der beim Stand der Technik angegebenen bevorzugten Größe von 1,5 bis 1,8 mm Größe bei entgegen der Drehbewegung gerichteten Orientierung der schraubenförmigen Rippen des Ankerbolzens keine Förderung aus dem Bohrlochinneren, wodurch bei der hohen Umdrehungsgeschwindigkeit Reibungswärme entsteht, eine Schnellhärtung auslöst, aber durch das Weiterdrehen keinen festen Mörtel entstehen läßt.

Auf diese Weise kommt es erst gar nicht zu einer Festlegung durch Verbund im Bohrlochinneren, wo die Abriebkörner auch gar nicht in der Lage sind eine nennenswerte Durchmesservergrößerung zu erreichen. Die Reibkörner reduzieren lediglich die Oberflächenrauhigkeit der Bohrlochwand, vergleichbar mit der Wirkung eines Schleifpapiers grober Körnung, was den Verbund nachteilig beeinflußt.

Bei dem bekannten Verfahren zum Setzen eines Ankerbolzens nach P-29 41 769 wird die Aufgabe, den Ankerbolzen mit der Funktion auszustatten ein gut wirksames Werkzeug zum Erstellen einer konischen Hinterschneidung einer zylindrichen Vorbohrung zu sein, für eine hochbelastbare, formschlüssige Verankerung des Ankerbolzens zu dienen, mit den aufgezeigten Lehren, insofern nicht erreicht, als es zu einem wirksamen Hinterschnitt in der kurzen Dauer von einigen Minuten erst gar nicht kommt. Darüberhinaus lassen sich im Beton keine so maßgenauen Bohrungen erstellen, wie das angegebene Verfahren voraussetzt. Geringe Abweichungen im Schneideneckmaß der Steinbohrer, wie sie allgemein üblich sind, bedingen neben der Abnützung durch Gebrauch Bohrlochtoleranzen, die das Setzen des Ankerbolzen erheblich beeinflußen. Zu kleine Bohrungsdurchmesser erschweren das Einbringen des Ankerbolzens in der Weise, daß es zu der beschriebenen Erwärmung des Ankerbolzens und zur Bindemittelzerstörung kommt. Bei Toleranzabweichungen, die eine Vergrößerung gegenüber dem Solldurchmesser bedingen, kommt es nicht zum erforderlichen Hinterschnitt, um aufgabengemäß eine hochbelastbare, formschlüssige Verankerung zu ergeben.

Ganz allgemein haftet der Technologie mit schraubenförmig profilierten Ankerstangen unter Verwendung von Mörtelpatronen eine Vermörtelung des Ringspalts durch schlagendes Eindrehen der Ankerstange das Risiko an, daß bei zu langem Drehen Mörtel aus der Bohrung gefördert wird. Dies ist insofern ein Nachteil dieser Technologie, weil der Ringspalt dann nur teilweise in Verbund mit der Bohrlochwandung gebracht wird. Damit ist eine verminderte Tragfähigkeit verbunden, aber auch das Risiko, daß Wasser und Agenzien in den Spalt eingelagert werden und eine Zerstörung, sei es durch Korrossion oder Frost, nach sich ziehen können.

Der Erfindung liegt die Aufgabe zugrunde, eine Ankerbefestigung anzugeben, mit schraubenförmigen rippenprofilierten, in ein rotationssymmetrisches im dichten Fels, Beton, Stahlteilen oder dergl. erstelltes Sackloch ver setzten Rundstab, dessen Spalt zur Lochwand mit einem aushärtbaren, flüssigen Bindemittel und Feststoffen ausgemörtelt, in Verbund zum Ankergrund steht und auch durch Formschluß festgelegt ist, in der Weise, daß bei Versagen des Verbunds infolge Brand oder Rißentstehung mit auf 0,4 mm Breite begrenzten Rißweiten im unmittelbaren Bereich des Sacklochs, die Nachteile kategoriegemäßer Ankerbefestigungen und deren Herstellverfahren auszuschließen und mit einem Minimum an Energie- und Zeitaufwand ein Optimum an Tragfähigkeit und Sicherheit durch Kontrollierbarkeit bereits beim Herstellen der kombinierten Festlegung durch Verbund und Formschluß zu erzielen.

Diese Aufgaben löst die Erfindung auf die in den kennzeichnenden Teilen der Haupt- und Nebenansprüche angegebenen Weise. In Unteransprüchen sind Lösungen für besondere Ausgestaltungen der Erfindungsgegenstände angegeben.

Grundlage der Erfindung ist unter Verwendung geeigneter Elemente die Begrenzungsflächen der festzulegenden Körper so zu gestalten, daß eine selbsthemmende Verkeilung stattfinden kann und somit ein Formschluß zustande kommt. Dies wird bei der erfindungsgemäßen Ankerbefestigung dadurch erreicht, daß zusätzliche Elemente im Spalt zwischen Lochwand und Stab verkeilt werden. Die Erfindung sieht vor, die für eine selbsthemmende Verkeilung erforderliche geneigte Fläche am Stab oder an der Lochwand oder sowohl am Stab als auch an der Lochwand auszubilden und den Stab dazu zu verwenden, das vorher mittels Patrone ins Sackloch eingebrachte Gemenge aus flüßigem Bindemittel und Feststoffen so zu durchmischen, zu verteilen und zu verdichten, daß keine die Festigkeitsbildung gefährdende Erwärmung stattfindet und das Herausfördern des Mörtels durch zu langes Drehen vermieden wird. Sie sieht ferner vor die mechanische Verkeilung gegenüber der Lochwand und die Verspannung des Einsteckteils zum Lochgrund durch eine Drehmomentsbegrenzung beim Setzen des Ankerstabs definier- und kontrollierbar auszuführen.

Bei einer Ankerbefestigung in dichtem Fels, Beton oder dergl. ist die für die Verkeilung erforderliche geneigte Fläche am Stab ausgebildet, indem das Einsteckteil eine gewendelte Fläche besitzt mit einer schiefen Neigung zur zylindrischen Lochwand, wodurch zusätzliche Elemente im Spalt punktweise gegen die Lochwand gepreßt sind, so daß sie sich kerbend eingetieft haben und dadurch in Formschluß zur Lochwand stehen, unabhängig, ob die Ausmörtelung schon, oder noch einen Verbund zur Lochwand hat.

Die Pressung der Elemente entsteht dadurch, daß in Umfangsrichtung sich der Spalt zwischen Stab und Lochwand keilförmig mit kleinen Winkeln verjüngt und bei Drehung des Ankers ohne Translationsbewegung ein Verkeilen stattfindet. Der Grund für das selbsthemmende Verkeilen der Elemente liegt in der erfindungsgemäßen Ausgestaltung der geneigten Flächen. Zu dem Zeitpunkt, wo eine Festlegung durch Verkeilung der Elemente eintritt, läßt sich auch keine weitere Drehbewegung mehr ausführen. Der entstehende Zwang bewirkt nicht nur das Festlegen durch Verkeilen, sondern auch das Eintiefen der Elemente in der Lochwand. Gleichzeitig verhindert er auch die weitere Drehbewegung des Ankerstabs, sodaß das nachteilige Herausfördern des aushärtbaren Mörtels im selben Augenblick unterbunden wird, wo das innere Einsteckteilende auf den Lochgrund trifft und sich die selbsthemmende Verkeilung aufgebaut hat. Dies ist aber auch gleichzeitig ein sehr bedeutsamer Verfahrensschritt, da bei Anwendung eines definierten Drehmoments zum selben Zeitpunkt selbsttätig eine Kontrolle der mechanischen Festlegung vorgenommen wird.

Für die Eintiefung der Elemente sieht die Erfindung vor, daß ein Verfahren der Vermörtelung angewendet wird, bei dem der stabförmige Anker beim Eintreiben auf das mit der Mörtelpatrone gefüllte Sackloch mit Stoß- und Drehimpulse beaufschlagt wird, wodurch bei zeitlich rascher Folge der Impulse eine anzustrebende, langsame Drehbewegung zustande kommt und die Förderung des Patroneninhalts aus dem Sackloch vornehmlich durch die Stoßimpulse ohne eine hohe Reibungswärme zu erzeugen, erzielt wird. Die Impulse in Längs- und Umfangsrichtung werden mit an sich bekannten Geräten erzeugt, die Einrichtungen zum stufenlosen Regulieren der Impulsfrequenz und -Intensität, sowie eine einstellbare Höchstwertbegrenzung besitzen. Das Aufbereiten, Mischen und Verteilen des in Form einer Mörtelpatrone ins Sackloch eingebrachten aushärtbaren Gemenges wird mit Hilfe des stabförmigen Ankers bei kleiner Umfangsgeschwindigkeit vorgenommen.

Erreicht der Ankerstab den Lochgrund bringen die in Umfangsrichtung wirkenden Impulse, die Elemente, die schraubenförmig im Profiltal eingelagert sind entsprechend der Lochwandrauhigkeit in Kontakt mit der Lochwand und damit unter Zwang. Das Profil auf dem Einsteckteil ist so ausgebildet, daß es nur im lochgrundnahen Bereich die Elemente aufzunehmen in der Lage ist. Die Zwängung der Elemente führt mit ihrer Eintiefung in die Lochwand zur mechanischen Festlegung des Ankers, noch bevor der Mörtel ausgehärtet ist. Sobald der eingestellte Grenzwert des Drehimpulses erreicht ist kommt die Drehbewegung ganz zum Stillstand. Die Quellen für Fehlmontagen sind damit auf ein Minimum reduziert, die Sicherheit für eine definierte Ausführung wesentlich erhöht.

Das am Lochgrund aufstehende Ende des Einsteckteils unterliegt einer Druckvorspannung, weil die schraubenförmig im Profiltal des Einsteckteils aufgenommenen Elemente, wie ein Gegengewinde mit Selbsthemmung den Drehimpuls in eine Druckvorspannung umgesetzt haben.

Voraussetzung für die Durchführung des erfindungsgemäßen Verfahrens sind ein geeignetes Setzgerät, ein besonders gestalteter Anker, Elemente zur Erzielung des Formschlußes und ein konfektionierter Behälter, der das Gemenge aus flüssigem Bindemittel und Feststoffen beinhaltet.

Gerät, Ankerstab, Elemente zur Erzielung des Formschlußes und der konfektionierte Behälter sind Mittel, sowohl für die erfindungsgemäße Ankerbefestigung als auch für das erfindungsgemäße Verfahren zur Herstellung der Ankerbefestigung und somit auch Gegenstand des beantragten Schutzbegehrens.

Für eine Ankerbefestigung in Form eines mit schrägen oder schraubenförmigen Rippen profilierten Betonstahlstabs im Sackloch eines Stahlteils oder dergl., sieht die Erfindung die für die selbsthemmende Verkeilung erforderliche geneigte Fläche am Sackloch vor, indem die Erzeugende der Lochwandung zur Rotationssymmetrieachse einen Winkel einschließt, wodurch der Durchmesser des Lochs am Grund größer als am Mund ist und die selbsthemmende Verkeilung von zusätzlichen Elementen, die von den Profilrippen gegen die Lochwand gepreßt und durch die ausgehärtete Vermörtelung einen Formschluß im Gesamten ergibt und eine schlupffreie, steife Verbindung zwischen Ankerstab und Lochwandung hergestellt ist.

Die erfindungsgemäßen Ankerbefestigungen stellen eine Kombination der Festlegung mittels Verbund und der Festlegung durch Formschluß dar, wo der Formschluß durch Nutzung der mechanisch erzeugten selbsthemmenden Verkeilung besonderer Elemente, die sich zwischen den zueinander geneigten, festzulegenden Begrenzungsflächen einzwängen. Die in der Erfindung erzielte Kombination von Verbund und Formschluß stellt eine Optimierung dar, weil die Schwäche des Verbunds bei Brand, insbesondere bei Temperatureinwirkung über 150 Grad Celsius, wenn das polymere Bindemittel verschwelt, oder, wenn durch Risse im Beton die Verbund-Tragfähigkeit abfällt vom Formschluß kompensiert wird; andererseits die Schwäche des Formschlußes bei Beanspruchungswechsel und Umkehr der Beansprunchungsrichtung ein Lösen der Selbsthemmhung und damit ein Verlust der Formschluß-Festlegung durch den Verbund verhindert wird.

Im Folgenden wird die Erfindung anhand der in den Zeichnungen dargestellten Beispielen nähers erläutert. Es zeigt:

Fig. 1: Teilansicht des inneren Einsteckteilendes mit in Lochachse geführten Schnitts des im zylindrischen Sacklochs vermörtelten Spalts;

Fig. 2: Ein Beispiel für eine Ausführung eines stabförmigen Ankers im achsialen Schnitt mit der speziellen Profilierung Q,P zur Erzielung einer selbsthemmenden Verkeilung von Formschluß erzeugenden Elementen;

Fig. 3: Rohrförmiger Behälter im Schnitt mit den proportionierten Mengen der Bestandteile des aushärtbaren Gemenges;

Fig. 4: Beispiel einer Ankerbefestigung mit einem im achsialen Schnitt dargestellten Stahlteil, wo die, für die selbsthemmende Verkeilung erforderliche geneigte Fläche in der Sacklochwand ausgebildet ist.

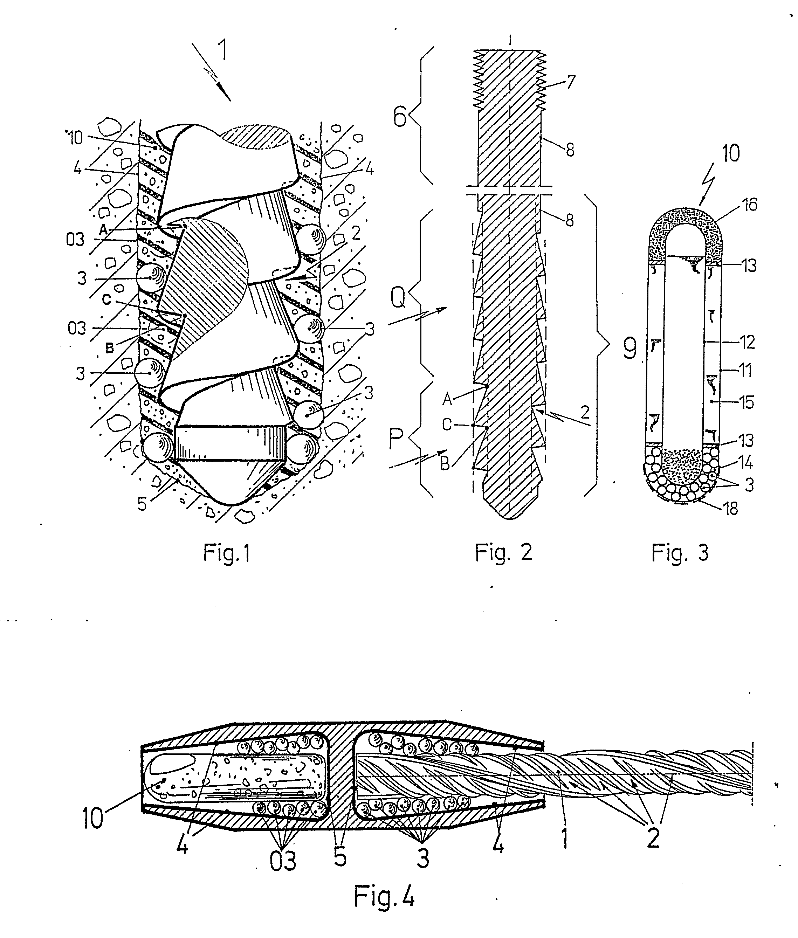

Aus der in Fig. 1 dargestellten inneren Ankerspitze mit der Profilierung P sind die Formschluß erzeugenden Elemente 3 als gleichförmige Kugeln auf der Profilflanke AC bereits in jener Stellung dargestellt, in welcher sie unter einem Spreizdruck gegen die zylindrische Lochwand 4 verspannt sind. Ihre Lage während der Einbringung des Ankers in diese dargestellte Position ist gestrichelt durch die Elemente 03 deutlich gemacht. In dieser Lage berühren sie noch nicht die Lochwand, da sie sich im Profiltal 2 befinden.

Das Prinzip der Ankerbefestigung geht aus der dargestellten Endstellung der Elemente 3 hervor. Die Kugelform der Elemente 3 hat zur Folge, daß unter der Wirkung der nach dem erfindungsgemäßen Verfahren angewandten Drehimpulse auf den Ankerstab sich die Elemente in der Lochwand eintiefen und dadurch einen Formschluß zum Ankergrund ergeben. Durch die Verfüllung des Spalts zwischen Ankerstab und Lochwand mit dem aushärtbaren Mörtel kommt darüberhinaus nach Aushärtung des Bindemittels ein flächiger Verbund zustande, der erforderlichenfalls eine plastische und oder elastische Verschieblichkeit gewährleistet, wenn ein Riß durch den Ankergrund sich ausbreiten sollte, sodaß eine Sicherung des Formschlußes bestehen bleibt. Unter widrigen Umständen würde eine Verschiebung des Ankerstabs eine Erhöhung des Anpressdruckes der Elemente an die Lochwand zur Folge haben und eine Vergrößerung der Eintiefung der Elemente in die Lochwand bewirken.

Die Erfindung sieht deshalb auch die Verwendung besonders geeigneter Bindemittel mit niederem Elastizitätsmodul und hoher Bruchdehnung vor, um einen Mörtel zu erhalten, der für einen verschieblichen Verbund geeignet ist. Insofern unterscheidet sich der Mörtel auch von herkömmlichen, bisher angewandten bekannten Polymermörteln die eine hohe Festigkeit und einen starren Verbund zwischen Ankerstab und Lochwand zur Folge haben.

Die Erfindung hat auch einen Anker zur Durchführung des erfindungsgemäßen Verfahrens zum Gegenstand. In Fig. 2 ist ein Beispiel für eine Ausführungsform eines stabförmigen Ankers 1 im Schnitt dargestellt. Die Darstellung macht deutlich, daß das Anschlußteil 6 zum Teil aus einem Gewindeprofil 7 und einem Schaft 8, das Einsteckteil 9 aus einem Schaft 8, einer Profilierung Q und einer Profilierung P am Einsteckteilende besteht.

Diese Profilierungen Q,P bestehen aus einer schraubenförmigen, von dem zylindrischen Verbund nahe der Stirnfläche ausgehenden Nut mit einem, im wesentlichen dreieckförmigen Querschnitt. Die ungleichen Flanken CB und AC dieser Nut nehmen zueinander einen Winkel ACB zwischen 80 und 100° ein und sind so angeordnet, daß die schmale Flanke CB zum inneren Ende des Einsteckteils weist.

Eine wesentliche Rolle für die Durchführung des erfindungsgemäßen Verfahrens spielt die Steigung der Flanke AC in Umfangsrichtung. Diese Steigung muß zum einen so klein gehalten werden, daß eine Selbsthemmung zu den Elementen eintritt, zum Anderen soll die Ganghöhe der Profilrippe klein gehalten werden, um das Fördern der Elemente aus dem Lochgrund zu erleichtern. Die Erfindung sieht daher vor, daß die Summe aus dem Reibungsbeiwert der Elemente auf der Profilflanke und der Tangens aus dem Steigungswinkel der Flanke AC in Umfangsrichtung kleiner gehalten ist, als der Reibungswinkel des Elements 3 zur Lochwand 4. Unter dieser Voraussetzung läßt sich durch den Impuls in Umfangsrichtung das Element 3 in die Lochwand 4 eintiefen, da es dann an der Lochwand 4 festgehalten und unter einen radialen Druck gesetzt wird. Die parallel zur Ankerachse auftretende Kraftkomponente, wird dabei durch Reibung aufgenommen. Würden diese Bedingungen nicht eingehalten käme es nicht zur Festlegung des kugelförmigen Elements 3 an der Lochwand 4.

Der Ausgestaltung des Profiltals kommt namentlich am Einsteckteilende im Rahmen der Erfindung eine besondere Bedeutung zu. Sie muß dort so ausgebildet werden, daß sie während der Dreh- und Schlagimpulse die Elemente 3 aufgreift, gewissermaßen einfängt, um sie im Profiltal zu fördern. Dies gelingt nur dann, wenn die Umdrehungsgeschwindigkeit sehr nieder gehalten wird und Vorkehrungen getroffen sind, daß der Ringspalt auf vollem Umfang gleiche Dicke besitzt. Zum Einen wird dies durch die Abstimmung des Mörtelgrößtkorn's auf die Spaltdicke, zum Anderen durch eine besondere Ausbildung der Ankerspitze erreicht. Darüberhinaus muß die Anzahl der Elemente 3 so groß gewählt werden, daß eine Elementenkette sich mindestens über eine Ganghöhe des Ankers ausbilden kann.

Für die Ausgestaltung des Einsteckteils mit einem Profil gleicher Ganghöhe, jedoch unterschiedlicher Profilhöhe besteht in einem Unteranspruch ein Schutzbegehren. Die Abstufung des Profils in seiner Höhe bewirkt nämlich, daß die Elemente 3 in einem vorgegebenen Abschnitt mit dem Profil P verbleiben, das eine größere Profilhöhe aufweist als das Profil Q. Dabei wird vorausgesetzt, daß die maximale Korngröße der Zuschlagstoffe im Gemenge kleiner ist als der Durchmesser der Elemente 3, sodaß diese im Profil Q sich einlagern können, eine Zentrierung des Ankers bewirken und den Ringspalt zusammen mit den übrigen Mörtelbestandteilen ausfüllen.

In Fig. 3 ist ein Beispiel für die Ausgestaltung eines rohrförmigen Behälters zur Aufnahme proportierter Mengen des aushärtbaren Gemenges für den Mörtel zur Ringspaltverfüllung dargestellt. Das Beispiel zeigt eine Mörtelpatrone 10, bestehend aus zwei ineinandergefügte Glaspatronen 11,12 die durch Distanzringe 13 koachsial zueinander gehalten werden. Die innere Patrone 12 enthält das flüssige Bindemittel, Komponente E und bedarfsweise feinkörnige Zusatzstoffe. Sie ist hermetisch durch Abschweißen abgeschlossen.

Die äußere Patrone nimmt im Bodenteil in der Kammer 14 die Elemente 3 auf. Diese Kammer ist mit dem Distanzring 13 zur Kammer 15 abgegrenzt. Die Kammer 15 wird gebildet von dem zylindrischen Mantelteil zwischen den beiden Patronen 11 und 12. In dieser Kammer ist die zweite Komponente des Bindemittels eingelagert. Bei einer bevorzugten Bindemittelzusammensetzung sind hierfür feinkörnige, hydraulisch abbindende Mineralien vorgesehen, die zusammen mit der flüssigen Komponente E in Kammer 12, in einem Zeitraum von 10 Minuten abbinden. Selbstverständlich kann im Bedarfsfall der Inhalt der Kammern anders aufgeteilt werden. Auch ist vorgesehen, aus schließlich flüssige Bindemittelkomponenten zu verwenden, wie in Fig. 3 dargestellt. Die Wahl von Bindemitteln auf hydraulischer Basis ist besonders dann nützlich, wenn man einen hohen Feuerwiderstand der Ankerbefestigung erreichen will.

Schließlich befindet sich in der Kammer 16 der Zuschlagstoff für das Mörtelgemenge, der im Bedarfsfall auch mit dem Feststoff-Bindemittel gemeinsam in Kammer 15 eingelagert werden kann, womit dann eine Trennung zu Kammer 16 entfallen kann. Auch die äußere Patrone 11 ist hermetisch durch Abschweißung abgeschlossen. Das untere Ende der äußeren Patrone 11, in welcher die Kammer 14 mit den Elementen 3 sich befindet, ist mit einer Kennzeichnung 18 versehen. Die Kennzeichnung 18 markiert jenes Ende der Patrone, das voraus in die Bohrung einzuführen ist, damit die Elemente 3 am Lochgrund 5 zu liegen kommen.

In einer besonderen Ausführungsform der Patrone 10 ist die innere Patrone 12 mit einem Reaktionsharz gefüllt, das im ausgehärteten Zustand ein gummi-elastisches Verformungsverhalten besitzt mit einer hohen Bruchdehnung größer 100 % und einer Querdehnungszahl nahe 0,5. Bei einer derartigen Mörtelmatrix zeichnet sich das ausgehärtete Gemenge durch eine ausgeprägte zähe Verbund-Verschiebecharakteristik aus und tritt ein zusätzlicher Selbsthemmeffekt durch die Vermörtelung ein. Die achsparallele Verformung in der Bindemittel-Matrix hat Querverformungen in radialer Richtung zur Folge, welche wegen der hohen Haftfestigkeit behindert wird, wodurch der Verschiebungswiderstand in Loch paralleler Richtung erheblich ansteigt. Dies macht sich die Erfindung durch Wahl geeigneter Bindemittel insbesondere dann zu Nutze, wenn der Ankergrund unter einer Zugbeanspruchung steht und Risse von geringer Breite, bis 0,4 mm, parallel zur Ankerachse zu unterstellen sind. Die Lochaufweitung hat deshalb noch kein Versagen der Ankerbefestigung zur Folge, sondern nur ein geringes Nachgeben, bis die in Formschluß stehenden Elemente wieder in ihren Spannungszustand gelangt sind.

Ein Beispiel für eine erfindungsgemäße Ankerbefestigung in einem Teil aus Metall, in dem die für die Verkeilung erforderliche geneigte Fläche an der Lochwand ausgebildet ist, wird in Fig. 4 dargestellt. Es handelt sich um eine rohrförmige Hülse mit Zwischenwand, die im Längsschnitt die koachsialen Sacklöcher als eine linke und rechte trapezförmige Kammer erkennen läßt. Die linke Kammer als rotationssymmetrisch ausgebildetes Sackloch, dessen Durchmesser sich zum Bohrlochgrund 5 hin erweitert, ist mit einer Mörtelpatrone 10 und den Formschluß erzeugenden Elementen 03 gefüllt und zeigt den Zustand vor der Ausführung der Ankerbefestigung.

In der rechten Kammer ist ein mit Schrägrippen profilierter Betonstahl 1 dargestellt, der durch die Formschluß erzeugenden, im Profiltal 2 liegenden selbsthemmend verkeilten Elemente 3 gegenüber der Lochwand 4 festgelegt ist, dadurch daß die Elemente 3 Festkörperbrücken zwischen zylindrischem Rundstab und geneigter Sacklochwand herstellen, die durch die Ausmörtelung in einem starren Zustand fixiert sind und in ihrer Gesamtheit einen Formschluß zum Stahlteil bewerkstelligen.

Der konische Anzug der an sich zylindrischen, äußeren Hülsenwand ermöglicht die Hülse mit einem passenden Adapter mit einem Setzgerät zu verbinden, der die verfahrensgemäßen Stoß- und Drehimpulse auf die Hülse überträgt. Die Verjüngung der Hülsenwand bewirkt ferner eine Vergleichmäßigung der Schubspannungsverteilung der Verbundspannungen in der Vermörtelung.

Bei der Durchführung des erfindungsgemäßen Setzverfahrens des Ankers 1 in einem zylindrischen Sackloch befinden sich die kugelförmigen Elemente 3 zunächst im Lochgrund 5 und müssen von der Ankerspitze selbsttätig aufgenommen werden. Um dies zu erreichen sind Maßnahmen erforderlich die verhindern, daß der Ankerstab 1 an der Bohrlochwandung 4 anliegt. Daher sieht die Erfindung eine besonders ausgebildete Ankerspitze vor, bestehend aus einer kegelförmigen Stirnfläche die in einen kurzen, zylindrischen Teil übergeht, an dem sich das Profil P anschließt.

Beim Eintreiben der Ankerspitze auf die Mörtelpatrone wird deren Inhalt im Spalt verteilt, wobei die Ankerspitze, namentlich das Grobkorn, gegen die Bohrlochwandung fördert und eine Zentrierung dadurch erzielt wird, daß das Grobkorn nur in den Profiltälern gefördert werden kann. So ist während der Aufbereitung des Patroneninhalts zu einem Mörtel bereits eine weitgehende Zentrierung der Stabachse zur Bohrungsachse erzielt.

Beim Auftreffen der Ankerspitze auf die am Lochgrund 5 befindlichen Formschluß erzeugenden Elemente 3 bewirkt nun der zylindrische Teil der Ankerspitze, daß sich die Elemente zunächst ringförmig an der Bohrlochwandung 4 anlegen, sodaß die Spitze eine koachsiale Lage zur Lochachse einnimmt. Die kugelförmigen Elemente 3 gelangen nunmehr in Folge der Drehbewegung des Ankerstabs in das Profiltal 2 und reihen sich dort schraubenförmig auf.

Infolge der Drehimpulse werden die kugelförmigen Elemente aus dem Lochgrund befördert, so lange bis sie aufgrund der kleineren Abmessungen der Nut des Profils Q nicht mehr weiter gelangen können. Unter der anhaltenden Drehbewegung des Ankerstabs werden sie nunmehr gegen die Lochwandung verkeilt, da in der Umfangsrichtung der Spalt sich keilförmig verringert. Die Drehbewegung wird nunmehr weitgehend behindert, da nacheinander die kugelförmigen Formschluß erzeugenden Elemente 3 selbsthemmend in der Lochwand 4 sich verkeilen. Die in kurzer zeitlicher Folge aufgebrachten Drehimpulse vermögen den Ankerstab um seine Längsachse nur noch mit kleiner Drehwinkeländerung zu bewegen, in dem Maße wie die Elemente 3 sich in die Lochwand 4 eintiefen.

Nur vereinzelt wird es während der Durchführung des Verfahrens in der Stellung 03 zu einer Berührung mit der Lochwand 4 kommen, mit der Folge, daß die Drehung des Ankers eine zusätzliche Kraftkomponente zum Lochgrund 5 ausgesetzt wird, wenn das Element 03 an der Bohrungswand sich reibt und kurzfristig festgehalten wird. Würde man mit dem Stab eine aus dem Loch herausgerichtete Translationsbewegung ausführen, würden dies die an der Lochwand 4 sich anlegenden Elemente 3 verhindern, weil die Profilflanke AC eine Neigung zur Lochwand besitzt, weshalb sich die Elemente verkeilen würden. Dies macht verständlich, daß eine Drehung des Ankers 1 auch nur solange ausgeführt werden kann, wie sich der Ankerstab zum Lochgrund hin bewegen kann. Sobald er dort aufsitzt finden keine Translationsbewegungen mehr statt, wobei unter der reinen Drehbewegung dann die Verkeilung der Elemente gegen die Lochwand eintritt.

Sobald daher das Einsteckteil 9 am Lochgrund 5 aufsteht, tritt Hemmung in der Drehbewegung ein. Die an der Lochwand sich reibenden Elemente 3 kommen in Zwang und behindern eine weitere Bewegung. Durch die erfindungsgemäß klein gehaltene Steigung der Profilfläche AC in Umfangsrichtung bewirkt ein Drehimpuls ein sich allmählich steigerndes Verkeilen der Elemente, wodurch die Pressung der kugelförmigen Elemente 3 schließlich so hoch werden, daß eine kerbende Eintiefung in der Lochwand stattfindet.

Zu diesem Zeitpunkt bewirken die Drehimpulse nur noch in dem Maße eine Winkeländerung, um die Ankerlängsachse, wie sich die Elemente 3 in die Lochwand eintiefen und eine Erhöhung des Zwangs wie beim Klemmrollen-Effekt eintritt, je weiter sie aus dem Profiltal heraus auf der Profilflanke AC gedrängt werden. Der erfindungsgemäß sehr klein gewählte Steigungswinkel der Profilflanke AC in Umfangsrichtung hat eine Selbsthemmung zur Folge und bewirkt, daß die Drehwinkeländerungen einen sehr langsamen Anstieg der radialen Anpreßdrücke zur Folge haben.

Wird das Drehmoment auf den Ankerstab, wie die Erfindung es vorsieht, bis zum festgelegten Grenzwert gesteigert, so tritt mit der Eintiefung der Elemente in die Lochwand eine Verspannung des Einsteckteilendes auch zum Lochgrund 5 hin ein. Die Verspannung des Einsteckteil 9 in longitudinaler, wie radialer Richtung, zeichnet die erfindungsgemäße Ankerbefestigung insofern aus, als mit Beendigung des Setzvorganges, noch vor Aushärtung des Mörtels, Lasten durch Formschluß des Ankers übertragen werden können.

Die erfindungsgemäße Ankerbefestigung schließt somit auch die Möglichkeit ein, die Aushärtung des Spaltmörtels, unter Vorspannung des Ankers 1 auszuführen, indem am Anschlußteil 6 eine Mutter mit einem Drehmoment beaufschlagt wird und solange gegen den Ankergrund verspannt bleibt, bis der Spaltmörtel seine Festigkeit gebildet hat.

Mit dem Auftreffen der Ankerspitze am Lochgrund wird selbsttätig verhindert, daß Mörtel aus dem Spalt gefördert wird und damit ein wesentlicher Nachteil herkömmlicher Setzverfahren beseitigt.

Die Besonderheit des erfindungsgemäßen Verfahrens liegt darin, daß die Höhe der Pressungen in den punktförmigen Berührungsflächen der Elemente 3 in der Lochwand 4, sowohl durch die Neigung der Profilflanke AC beeinflußt werden kann, als auch durch die Gestalt der Elemente. Die erfindungsgemäße Ausgestaltung in Kugelform befähigt diese Elemente 3 sich Unebenheiten der Lochwand anzupassen und gewissermaßen auszugleichen. Dadurch wirken sich auch die Toleranzen im Durchmesser auf den Formschluß nicht aus. Die Kette der Elemente, die sich schraubenförmig über den vollen Umfang des Einsteckteils erstreckt, ist so flexibel, daß sie sich jeder Situation an der Lochwand anzupassen vermag. Zum Anderen besitzt ein Element in Form einer Kugel die höchste Gestaltfestigkeit, eine wichtige Voraussetzung um einen Formschluß mit dem heterogen aufgebauten Beton aus mineralischen Zuschlagstoffen hoher Festigkeit eingehen zu können.

Die besondere strukturelle Beschaffenheit des Betons läßt ein kerbendes Eintiefen in die Lochwand aber nur dann zu, wenn die eingrabenden Elemente auch eine hohe Härte besitzen. Die Erfindung sieht deshalb vor, die Elemente 3 aus Metallen, insbesonders aus gesinterten Metallen, wie z.B. aus Wolfram-Kobalt-Legierungen einzusetzen, die eine Härte von 10 nach Mohs besitzen. Aber auch gesinterte Mineralien und Keramiken erreichen eine Härte, die sie für diese Verwendung als geeignet erscheinen lassen.

Eine kerbende Eintiefung in den Beton mit einem Minimum an Energieaufwand erreicht man, wenn die Energie in Form eines Stoßes aufgebracht wird. Das erfindungsgemäße Verfahren sieht deshalb unelastische Stöße in Umfangsrichtung vor, wodurch die kerbende Wirkung der harten Elemente hoher Festigkeit erhöht wird.

Die Erfindung sieht die Verwendung eines an sich bekannten Gerätes vor, das in der Lage ist auf den Anker in kurzen zeitlichen Intervallen Kräfte in Längsrichtung und Umfangsrichtung auszuüben. Derartige Geräte werden in der Regel pneumatisch angetrieben und können durch geregelte Druckluftbe aufschlagung sowohl in longitudinaler Richtung, als auch in Umfangsrich tung Impulse erzeugen. Für ein Gerät mit zusätzlicher Einrichtung für alternierende Drehimpulsbeaufschlagung und Vorrichtung zur pneumatischen Bohrmehlbeseitigung wird Schutz beantragt. Aber auch halb pneumatisch arbeitende elektronisch steuerbare elektrisch angetriebene, mechanisch pneumatisch arbeitende Geräte können hierfür herangezogen werden. Die Erfindung macht sich dieser an sich bekannten Maschinen zu Nutze, um mittels des Einsteckteils 9 die in das Loch aufgrund der Kennzeichnung 18 mit den Elementen voran eingebrachte Mörtelpatrone 10 zu zerstören, ihren Inhalt zu durchmischen und dabei die Aktivierung des Bindemittels zu bewerkstelligen. Das schraubenförmige Profil Q,P auf dem Einsteckteil 9 wirkt dabei analog eines archimedischen Schöpfwerks und fördert den Mörtel über den Ringspalt, wobei eine Durchmischung und Verteilung stattfindet. Unter der Wirkung des longitudinal gerichteten Stoßes wird die Entleerung der Lochfüllung begünstigt, womit eine Longitudinalbewegung des Ankers in das Loch hinein verbunden ist.

Die Elemente 3 sind am Lochgrund 5 eingelagert und werden als letztes Medium vom Einsteckteilende aufgenommen, indem sie sich durch den zylindrischen Bund an der Ankerspitze bei der Drehung des Ankers in einem Ring entlang der Lochwandung ordnen und in das Profiltal 2 selbsttätig durch den Longitudinalstoß veranlaßt, gedrängt werden. Der zylindrische Bund spielt hierbei eine wesentliche Rolle, damit eine Vororientierung der Kugeln stattfindet, welche das kontinuierliche Einfädeln in das schraubenförmig ansteigende Profiltal 2 erleichtert. Daher sieht die Erfindung vor, die Steigung des Profils so klein als möglich zu wählen aber so groß, daß die Bedingungen der Selbsthemmung eingehalten werden. Erfindungsgemäß läßt sich ein vorzeitiges Verkeilen, noch bevor das Einsteckteilende am Lochgrund aufsteht dadurch vermeiden, daß der Anker mit alternierenden Drehimpulsen beaufschlagt wird. Zusätzlich am Nutauslauf angeformte Schwellen oder Nutungen mögen das Aufnehmen der Elemente erleichtern und sind bedarfsweise von Vorteil.

Die Einbringung der Formschluß erzeugenden Elemente in das zylindrische Sackloch läßt sich auch auf eine andere Art und Weise, als mittels der Mörtelpatrone vornehmen. Beispielsweise können die Elemente 3 bereits am Einsteckteil eingebaut sein, ehe der Ankerstab in das Sackloch eingeführt wird. Ein mit Bund ausgestattetes gummi-elastisches Schlauchstück hält die Elemente im Profiltal des Einsteckteils vormontiert fest. Beim Einsetzen in das Sackloch legt sich der Bund am Lochrand an und wird beim weiteren, drehenden Einbringen des Einsteckteils abgestreift, während die Elemente im Profiltal 2 durch die zylindrische Lochwand 4 gehalten werden.

Es liegt in der Natur der Sache, daß während des Setzens der Bewegungsvektor der Elemente (Resultierende aus den Bewegungskomponenten der Rotation $v_\omega$ und der Translation $v_t$) mit der Steigung des Profils übereinstimmen muß, um die Elemente im Profiltal zu halten und zu verhindern, daß vorzeitig Zwang auftritt. Erst dann, wenn keine Translation mehr stattfindet, das ist im Regelfall, wenn die Ankerspitze am Lochgrund aufsitzt, werden die Elemente aus der Lage im Profiltal heraustreten und gegen die Lochwand verspreizt.

Auch andere Arten der Einbringung als beschrieben, wie z.B. das Einsetzen einer Einheit, etwa in Form einer Spirale mit der Steigung des Profils P, die vorab ins Sackloch eingebracht wird und die Kugeln an der Lochwand hält, sind denkbar und gegebenenfalls von Vorteil. Eine weitere vorteilhafte Ausführung der Elemente in Form einer außengezahnten, profilfurchenden Metall-Spirale ähnlich den bekannten Gewindeeinsätzen wie z.B. Heli-Coil sind in besonders gelagerten Fällen nützlich und rationeller.

Bei der Einbringung der Elemente 3 mittels Patrone sieht die Erfindung vor jene Parameter, welche die Longitudinalbewegungskomponente $v_t$ bestimmen, während des Setzens zu verändern, dadurch daß in der ersten Phase des Mischens die Schlagenergie (Longitudinalimpulse) ganz klein gehalten wird und vorwiegend Drehimpulse aufgebracht werden. Erst in der Schlußphase, wenn die Ankerspitze die Elemente erreicht hat und sie aufgreift, muß die Energie der Schlagimpulse erhöht werden, um das Aufnehmen der Kugeln zu fördern. Die Drehbewegung muß soweit reduziert werden, daß die Kugeln ins Profiltal gedrängt werden und sich auf dem Umfang verteilen.

Das erfindungsgemäße Gerät für die Durchführung des Verfahrens zur formschlüßigen Festlegung ist mit Einrichtungen für alternierende Drehimpulsfolge oder eine Drehimpulsfolge im Pilgerschritt ausgestattet,- welche die Zeit zur Aufnahme der Elemente wesentlich verkürzen - und mit einer Regelung für die Schlagenergie versehen ist, die eine Reduktion der Schlagimpulse bis auf Null ermöglicht, wenn in der letzten Setzphase nur noch Drehimpulse erforderlich sind. Für das Verkeilen der Elemente in der Endstellung bringt das Gerät nur Drehimpulse auf, die durch die vorgewählte Grenzwerteinstellung festgelegt worden ist.

Das erfindungsgemäße Gerät zum Setzen der Anker zeichnet sich aber auch in Verbindung mit speziell geformten Bohrern als ein vortreffliches, leistungsstarkes Bohrwerkzeug aus, weil bei Nutzung der Antriebsluft zur Bohrkleinbeseitigung und Bohrkleinsammlung in eigenen Behältnissen nicht nur arbeitshygienische Verbesserungen erzielt, sondern vielmehr eine Minderung der Energieverluste beim Abtrag des Materials im Bohrloch erreicht werden und sich der Drehstoß-Impuls dem bis heute üblichen Stoß bei Bohrhämmern, mit zeitlich versetzter Drehbewegung, als überlegen und leistungsstärker erweist. Das Gerät ist nicht zusätzlich zum Bohrwerkzeug erforderlich, sondern ein nützlicher und vorteilhafter leistungsstärkerer Ersatz. Das erfindungsgemäße Gerät trägt dadurch sehr wesentlichen zur Wirtschaftlichkeit der Herstellung von Bohrlöchern und Ankerbefestigungen in Fels und Beton bei, weil das Gerät herkömmlichen Bohrhämmern an Lebensdauer, Robustheit, Leistungsfähigkeit, geringerem Gewicht, leichtere Handhabung, bei geringeren Anschaffungskosten überlegen ist.

Bei der Einbringung der Formschluß bewirkenden Elemente 3 mit Hilfe des Ankerstabs 1 verengen die Elemente den an sich schon kleinen Spalt zur Lochwand 4, weil sie trotz ihrer Lage im Profiltal über das Profil vorstehen. Dadurch ist die Durchmischung des Mörtels und seine Verteilung im Spalt erschwert, zumal der gesamte Inhalt der Mörtelpatrone an den vorstehenden Elementen vorbei gefördert werden muß. Dies erfordert einen sehr feinkörnig, aufgebauten Mörtel, in einer weichen Konsistenz.

Um ein vorzeitiges, vor Erreichen des Lochgrundes Einsetzen der Verkeilung der Elemente zu begegnen, sieht die Erfindung auch eine der Orientierung der Profilierung entgegengerichtete Drehbeaufschlagung vor, wodurch die Elemente im Profiltal gehalten werden können. Erst bei Erreichen der Setztiefe muß die Richtung der Drehimpulse dann umgekehrt werden, damit sich die Elemente verkeilen.

Eine entgegen dem Profilrippenverlauf gerichtete Drehbeaufschlagung ist auch bei jenen Ankern notwendig deren Profilsteigung steil ist, wie etwa bei profilierten Betonstählen.

Die Erfindung zeichnet sich dadurch aus, daß die Ankerbefestigung in einem spaltminimierten Bohrloch, unter Verwendung von konfektionierten Mörtelpatronen eine Festlegung des Ankers nicht nur durch Verbund, sondern auch im Bohrlochgrund mechanisch durch Formschluß mit einfachen Mitteln nach einem besonders wirtschaftlichen Verfahren vorgenommen wird. Bei einem minimalen Material- und Energieaufwand stellt die erfindungsgemäße Ankerbefestigung eine rationelle Lösung zur Beseitigung bestehender Mängel und Nachteile bekannter Verfahren dar. Sie beseitigt durch die Verwendung an sich bekannter Geräte, die die Möglichkeit bieten Schlag- und Drehimpulse gleichzeitig in Frequenz und Intensität regulierbar auszuführen, eine Möglichkeit den Ankerstab mit geringer Drehgeschwindigkeit so in die Bohrung einzubringen, daß es zu keiner Erwärmung der flüssigen Mörtelbestandteile kommt.

Die pneumatisch beaufschlagten Drehimpulsgeräte zeichnen sich dadurch aus, daß sie die Unfallgefahr im Umgang mit den Geräten wesentlich verringern, weil die Reaktionskräfte, welche der Drehimpuls erzeugt, wesentlich geringer sind, als bei einem herkömmlichen mechanischem Bohrwerkzeug, das beim Sichfangen des Bohrers im Bohrloch ein hohes Drehmoment auf den Bedienenden ausübt.

Darüberhinaus ermöglicht das Gerät eine definierte und kontrollierte Festlegung durch Formschluß, weil es eine Begrenzung der maximal aufbringbaren Drehimpulse besitzt. Zum anderen beseitigt es bestehende Nachteile bekannter Verfahren dadurch, daß mit der definierten Setztechnik ein zu langes Mischen und Herausfördern des Mörtels aus dem Ringspalt vermieden wird. Mit dem Erreichen des definierten Formschlußes ist die Drehbewegung beendet und verhindert, daß Fehler beim Setzen entstehen. Insofern trägt das angegebene Verfahren auch wesentlich zur Anhebung der Montagesicherheit bei.

Alles in allem zeichnet sich die erfindungsgemäße Ankerbefestigung im Vergleich zum bekannten vermörtelten Anker als fortschrittlicher, wirtschaftlicher und sicherer aus. Die zusätzlichen Elemente erfordern keine nennenswerten Mehrkosten im Vergleich zur Verbesserung und Erhöhung der Sicherheit. Das Verfahren stellt ebenso wie die Mittel zur Durchführung des Verfahrens einen echten Fortschritt in der Weiterentwicklung bekannter Technologien dar.

Liste der Symbole

1 Stabförmiger Anker

2 Profiltal

3 Verkeilung und Formschluß eingehendes Element in der Endstellung nach Abschluß des Setzvorgangs

03 Element 3 in Ausgangsstellung vor der Verkeilung und Herstellung des Formschlußes

4 Lochwand

5 Lochgrund

6 Anschlußteil

7 Gewindeprofil des Anschlußteils

8 glatter Schaft

9 Einsteckteil

Q,P Profile des Einsteckteils gleicher Ganghöhe

Q Profil mit kleiner Rippenhöhe

P Profil mit großer Rippenhöhe

A B C Eckpunkte des Profilrippenquerschnitts

10 Mörtelpatrone

11 Behälterwand der äußeren Patrone

12 Behälterwand der inneren Patrone

13 Distanzringe zur Aufteilung in einen 3 Kammer Behälter

14 Untere Kammer mit Elemente 3

15 Mittlere Kammer für Komponente E

16 Obere Kammer für Mörtelzuschlagstoff

17 Mörtelzuschlagstoff grobe Fraktion

18 Kennzeichnung des Patronenteils, in welchem die Verkeilung bewirkenden Elemente sich befinden

D die "eine" Bindemittelkomponente

E die "andere" Bindemittelkomponente

## Ansprüche

1. Ankerbefestigung, mit einem mit schrägen oder schraubenförmigen Rippen profilierten, in ein rotationssymmetrisches, in dichten Fels, Beton, Teilen aus Metall oder dergl. erstelltes Sackloch versetzten Rundstab, dessen Zwischenraum zur Lochwand mit einem aushärtbaren flüssigen Bindemittel und Feststoffen ausgemörtelt durch Formschluß und mittels Verbund festgelegt ist **dadurch gekennzeichnet**, daß der Formschluß durch selbsthemmende Verkeilung von zusätzlichen Elementen (3) hergestellt ist, indem die für die Verkeilung erforderliche geneigte Fläche am Stab, oder an der Lochwand, oder sowohl an der Lochwand wie am Stab ausgebildet ist, und das Einsteckteilende gegen den Lochgrund verspannt ist, die Verspannung durch den ausgehärteten Mörtel gesichert ist.

2. Ankerbefestigung, mit einem mit schrägen oder schraubenförmigen Rippen profilierten, in einen rotationssymetrischen, in dichtem Fels, Beton oder dergl. erstelltem Sackloch versetzten Rundstab, dessen Zwischenraum zur Lochwand mit einem aushärtbaren, flüssigen Bindemittel und Feststoffen ausgemörtelt durch Formschluß und mittels Verbund festgelegt ist, **dadurch gekennzeichnet,** daß der Formschluß durch selbsthemmende Verkeilung von zusätzlichen Elementen (3) hergestellt ist, indem die für die Verkeilung erforderliche geneigte Fläche am Stab in der Weise ausgebildet ist, daß auf dem Einsteckteil (9) eine gewendelte Fläche (AC) angeordnet ist, deren Erzeugende eine Neigung zur Stabachse besitzt, die am inneren Ende einen größeren Winkel zur Stabachse einnimmt, als das im mittleren Bereich des Einsteckteils angeordnete Profil (Q), wodurch bei gleicher Ganghöhe die Rippenhöhe des Profils (P) größer als die des Profils (Q) ist, daß die größere Rippenhöhe sich mindestens über eine Ganghöhe der Schraubenlinie erstreckt, daß sich die zusätzlichen Elemente auf Grund ihrer Abmessungen nur in das Profil mit der großen Rippenhöhe einfügen und als gleichförmige Kugeln oder als außenverzahnte profilfurchende Spirale oder dergl. in der zylindrischen Lochwand in Folge der Verkeilung eingetieft sind, das Einteckteilende gegen den Lochgrund verspannt ist und die Verspannung durch den ausgehärteten, einen zähen, verschieblichen Verbund eingehenden, bedarfsweise duktilen Mörtel gesichert ist.

3. Ankerbefestigung mit einem mit schrägen oder schraubenförmigen Rippen profilierten, in ein rotationssymmetrisches in Teilen aus Metall erstelltes Sackloch versetzten Rundstab, dessen Zwischenraum zur Lochwand mit einem aushärtbaren, flüssigen Bindemittel und Feststoffen ausgemörtelt durch Formschluß und mittels Verbund festgelegt ist **dadurch gekennzeichnet,** daß die für die selbsthemmende Verkeilung erforderliche geneigte Fläche am Sackloch ausgebildet ist, indem die Erzeugende der Lochwandfläche zur Lochachse einen Winkel einschließt, wodurch der Durchmesser des Sacklochs am Lochgrund größer ist als am Lochmund, daß der Formschluß durch selbsthemmende Verkeilung von zusätzlichen Elementen (3) dadurch hergestellt ist, daß die aus dem Bohrlochgrund herausgeförderten Elemente von der Profilrippe gegen die Lochwandung gepreßt und punktweise eine Festkörperbrücke zwischen Lochwand und im wesentlichen zylindrischen Rundstab bilden, daß infolge dieser Festkörperbrücken eine Festlegung des Rundstabs auf vollem Umfang gegenüber der Lochwand besteht, die durch das vollständige Ausfüllen des konischen Spalts zwischen Stab und Lochwandung und die Aushärtung des Bindemittels einen Formschluß im Gesamten ergibt und außerdem ein Verbund zwischen Ankerstab und Lochwandung hergestellt ist.

4. Verfahren zum formschlüssigen Festlegen und Vermörteln eines stabförmigen Ankers in einem rotationssymmetrischen Sackloch in die ein Gemenge aus einem aushärtbaren, flüssigen Bindemittel und Feststoffen mittels einer Patrone eingebracht wird, das beim Eindrehen des schraubenförmig, profilierten Einsteckteils des Ankers, durchmischt, aktiviert und verteilt wird, indem das Einsteckteil zum Mischen und Verteilen des Mörtels verwendet wird, **dadurch gekennzeichnet,** - daß die Formschluß eingehenden Elemente (3) wahlweise mit der Patrone, dem Ankerstab oder dergl. in das Sackloch eingebracht werden, - daß bei Einbringung mit der Patrone die Patrone so eingeführt wird, daß die Elemente voraus ins Loch gelangen und sie sich im Lochgrund (5) befinden,
- daß der stabförmige Anker (1) im Sackloch oder bei festgelegtem Anker das Anbauteil mit Stoß- und Drehimpulsen beaufschlagt und die Patrone zerstört wird, ihr Inhalt im Spalt zur Lochwand verteilt wird und der Anker eine koachsiale Lage zur Lochachse dadurch erfährt, daß die Gröstkörner der Zuschlagstoffe einen gleichdicken Abstand zur Lochwand herstellen,
- daß Elemente von den Profilflanken (AC) des Profils (P) am inneren Ende des Einsteckteils gegen die Lochwand (4) gepreßt werden, wenn das Einsteckteil (9) am Lochgrund aufsteht und die Elemente vom Profil (Q) mit kleiner Rippenhöhe nicht aufgenommen werden und bei fortgesetzten Drehimpulsen in Zwängung geraten und in die Lochwand eingetieft werden, - daß die auf dem Umfang verteilten Elemente einen Formschluß erfahren, so daß noch vor Ausbildung des wahlweise verschieblichen Verbunds der Anker schon festgelegt wird.

5. Gerät zur Durchführung des Verfahrens nach Anspruch 4, **dadurch gekennzeichnet,** daß die Stoß- und Drehimpulse pneumatisch erzeugt in kurzer zeitlicher Folge gleichzeitig wirksam werden und mit Steuereinrichtungen für eine stufenlos regulierbare Impulsfrequenz, Impulsintensität, Regler für Drehrichtung und alternierende Drehrichtung besitzt und mit einem Abschalter für die Stoßbeaufschlagung ausgestattet ist, daß der entgegengerichtete Drehimpuls gegebenenfalls ohne gleichzeitigen Stoßimpuls aus der Rückstellkraft eines Federelementes resultiert.

6. Stabförmiger Anker für eine Ankerbefestigung nach Anspruch 2 und für die Durchführung der Verfahren nach Anspruch 5, bestehend aus einem Anschlußteil am aus dem Verankerungsgrund herausstehenden Ende und einem eine Oberflächenprofilierung aufweisendem Einsteckteil, **dadurch gekennzeichnet,**
- daß das Anschlußteil zum Teil aus einem Gewindestück (7) und bedarfsweise auch aus einem Schaft (8) besteht,

- daß das Einsteckteil (9) mit einem Profil (Q) kleiner Rippenhöhe und einem am inneren Ende des Einsteckteils angeordneten Profil (P) großer Rippenhöhe ausgestattet ist,

daß die Profilrippe auslaufend wahlweise in einen kurzen zylindrischen Bund einmündet, dessen Höhe dem Durchmesser der Elemente (3) entspricht oder in einer abgerundeten Kegelspitze von rund 90° endet,

- daß die Profile (Q,P) aus einer schraubenförmigen, im Querschnitt dreieckförmiger Rippe gleicher Steigung bestehen und das Profil (P) sich mindestens über eine Ganghöhe, jedoch nicht mehr als über drei Ganghöhen erstreckt,

- daß die Flanken (BC) und (CA) der Rippe zueinander einen Winkel (BCA) zwischen 80° und 100° aufweisen,

- daß die schmale Flanke (BC) zum inneren Ende des Einsteckteils weist,

- daß der Winkel (CAB) im Profil (P) in der Weise auf die Formschluß erzeugenden Elemente (3) abgestimmt ist, daß die Bedingungen der Selbsthemmung eingehalten werden, nämlich daß, die Summe aus dem Reibungsbeiwert der Elemente auf der Flanke und der Tangens aus dem Steigungswinkel der Flanke (AC) in Umfangsrichtung kleiner ist, als der Reibungswinkel des Elements an der Lochwand (4).

7. Formschluß eingehende Elemente zur selbsthemmenden Verkeilung des Ankers in einer Ankerbefestigung nach den Ansprüchen 1, 2 und 3 **dadurch gekennzeichnet**, daß die Elemente in Form gleichförmiger, kugeliger Gestalt aus geschmolzenem oder gesintertem Material metallischen oder mineralischen, insbesondere keramischen Ursprungs bestehen.

8. Rohrförmiger Behälter zur Aufnahme proportionierter Mengen des aushärtbaren Gemenges aus flüssigem, mehrkomponentigem Bindemittel und Feststoffen für die Herstellung einer Ankerbefestigung nach einem der Ansprüche 1 bis 3 und zur Durchführung der Verfahren nach einem der Ansprüche 4 oder 5 wahlweise in Verbindung mit Ankern nach Anspruch 6 mit wenigstens zwei gegeneinander hermetisch abgedichteten Kammern für die Bindemittelkomponenten und den Feststoffen in der einen oder in mehreren Kammern enthalten sind, **dadurch gekennzeichnet**, daß der Behälter aus ineinandergefügten transparenten Glaspatronen (11,12) besteht, die durch Distanzringe (13) eine koachsiale Lage der inneren, mit Komponente (D) gefüllten Patrone (12) zur äußeren herstellen, sodaß die äußere Patrone (11) in drei Kammern (14,15,16) aufgeteilt ist, wahlweise mit den Elementen (3), nach Anspruch 7, gefüllten, außen durch die Kennzeichnung (18) markierte Kammer (14) am Boden, der mit der Komponente (E) gefüllten Kammer (15) in der Mitte und der mit Grobzuschlag (17) gefüllten Kammer (16) oben.

9. Aushärtbares Gemenge für Ankerbefestigungen nach Anspruch 2 **dadurch gekennzeichnet**, daß das Bindemittel aus einer Polymerkombination besteht, die im ausgehärteten Zustand eine zähe Verbund-Verschiebecharacteristik des Gemenges ausbildet, dadurch daß das erhärtete Bindemittel gummi-elastisch verformbar ist und eine Querdehnungszahl von 0,47 bis 0,50 aufweist, und sich durch eine hohe Bruchdehnung von mehr als 100 % auszeichnet.

10. Aushärtbares Gemenge für Ankerbefestigungen nach Anspruch 1 bis 3 **dadurch gekennzeichnet**, daß die Bindemittelkomponente (D) aus präparierten hydraulisch abbindenden Klinkermineralien, die Komponente (E) aus einer Polymeremulsion besteht und der Mörtel im ausgehärteten Zustand eine ausgeprägte visco-elastische Verformungsfähigkeit besitzt.

Fig.1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 398 209 (HILTI) * Insgesamt * | 1,7 | F 16 B 13/14 |
| A | | 2-4,6 | F 16 B 13/04 |
| | | | F 16 B 2/16 |
| A | EP-A-0 163 019 (HILTI) * Anspruch 1; Figur 1 * | 8 | B 25 D 16/00 |
| | --- | | |
| D,A | DE-C-2 941 769 (UPAT) | | |
| | --- | | |
| A | AT-A- 378 044 (REIMOSER) | | |
| | --- | | |
| A | AU-B- 541 499 (RAMSET FASTENERS) | | |
| | --- | | |
| A | GB-A-2 054 784 (NIPPON JIKKOU K.K.) ----- | | |

RECHERCHIERTE
SACHGEBIETE (Int. Cl.4)

E 21 D
F 16 B

Der vorliegende Recherchenbericht wurde für alle Patentansprüche erstellt

| Recherchenort | Abschlußdatum der Recherche | Prüfer |
|---|---|---|
| DEN HAAG | 27-02-1989 | VAN DER WAL W |

EPO FORM 1503 03.82 (P0403)